# EUROPÄISCHE PATENTANMELDUNG

(11) **EP 3 812 631 A1**
(43) Veröffentlichungstag der Anmeldung: **28.04.2021**
(21) Anmeldenummer: 20201425.4
(22) Anmeldetag: 13.10.2020
(51) Int. Cl.: F16K 11/085, F16K 11/076, F01P 7/00

(54) **MEHRWEGEVENTIL, FLUIDKREISLAUF UND KÜHLFLUIDKREISLAUF**

(30) Priorität: 25.10.2019 DE 102019128897
(71) Anmelder: WOCO Industrietechnik GmbH, 63628 Bad Soden-Salmünster (DE)
(72) Erfinder: Geißel, Eberhard, 36093 Künzell (DE); Hofmann, Torsten, 63628 Bad Soden-Salmünster (DE); Heldmann, Martin, 36381 Schlüchtern (DE)
(74) Vertreter: Schmid, Nils T.F.

(57) **Zusammenfassung**

Mehrwegeventil zum Steuern einer Fluidströmung in einem Fluidkreislauf, insbesondere einem Kühlfluidkreislauf, eines Kraftfahrzeugs, umfassend ein Ventilgehäuse mit wenigstens drei Fluidanschlüssen und einen in dem Ventilgehäuse angeordneten Drehschieber zum Einstellen der Fluidströmung, der wenigstens zwei Fluidkanäle aufweist und dazu eingerichtet ist, in Abhängigkeit seiner Rotationsstellung bezüglich seiner Rotationsachse je zwei Fluidanschlüsse mittels eines Fluidkanals fluidal miteinander zu verbinden, wobei die wenigstens drei Fluidanschlüsse und die wenigstens zwei Fluidkanäle bezüglich einer quer zur Rotationsachse orientierten Querrichtung einander überlappen.

## Beschreibung

Die vorliegende Erfindung betrifft ein Mehrwegeventil zum Steuern einer Fluidströmung in einem Fluidkreislauf, insbesondere einem Kühlmittelkreislauf, eines Kraftfahrzeugs. Des Weiteren stellt die vorliegende Erfindung einen Fluidkreislauf, insbesondere einen Kühlmittelkreislauf, eines Kraftfahrzeugs mit einem derartigen Mehrwegeventil bereit.

Gattungsgemäße Mehrwegeventile, die beispielsweise im Kühlmittelkreislauf eines Kraftfahrzeugs eingesetzt werden, umfassen ein Gehäuse mit Leitungsanschlüssen zur Medienführung und wenigstens ein Ventilglied, das beispielsweise ein Drehschieber sein kann, zum Verteilen der Medien auf die einzelnen Leitungsanschlüsse. Vor allem im Bereich der zunehmend an Bedeutung gewinnenden Elektromobilität wird die Führung von Fluid, insbesondere Kühlfluid, immer entscheidender und ein strömungsverlustarmes bzw. -freies Steuern der einzelnen Fluidströme immer wichtiger.

Aus DE 10 014 555 A1 ist eine Steuervorrichtung für den Kühlkreislauf einer Brennkraftmaschine mit zwei Kühlwasserteilströmen bekannt. Das Mehrwegeventil umfasst ein Gehäuse, das eine zylindrische Kammer begrenzt, in der ein als Drehwalze ausgebildetes Ventilglied angeordnet ist. In dem Gehäuse sind zwei Zulaufleitungen und eine Ablaufleitung ausgebildet. Durch Rotation der Drehwalze lassen sich verschiedene Durchflussszenarien realisieren, bei denen in der Drehwalze eingebrachte, fluidisch miteinander verbindbare Querbohrungen die Öffnungen fluidal miteinander verbinden. Die einzelnen Bohrungen sind von einem zentralen Leitelement abschnittsweise voneinander getrennt. Allerdings erstreckt sich das Leitelement nicht vollständig radial durch das Ventilglied hindurch, sodass die Bohrungen im Bereich des Querschnitts des Ventilglieds ineinander münden. Damit geht eine Vermengung der einzelnen Fluidteilströme einher, was zum einen nicht immer gewünscht ist und zum anderen zu Strömungsverlusten führt. Das Ventilglied gemäß DE 10 014 555 A1 ist nicht dazu in der Lage, eine der Zulauföffnungen zu verschließen, während die andere Zulauföffnung geöffnet und mit der Ablauföffnung verbunden ist.

Es ist eine Aufgabe der vorliegenden Erfindung die Nachteile des Standes der Technik zu verbessern, insbesondere ein Mehrwegeventil mit geringeren Strömungsverlusten bereitzustellen, bei dem es insbesondere möglich ist, Teilfluidströme gezielter zu steuern.

Diese Aufgabe wird durch den Gegenstand von Anspruch 1, 14 bzw. 15 gelöst.

Gemäß einem Aspekt der vorliegenden Erfindung ist ein Mehrwegeventil zum Steuern einer Fluidströmung in einem Fluidkreislauf, insbesondere einem Kühlfluidkreislauf, eines Kraftfahrzeugs bereitgestellt. Ein Kühlfluidkreislauf kann beispielsweise zwischen einem Motor, insbesondere einem Verbrennungsmotor oder einem elektrisch betriebenen Motor, und einem Kühler eines Kraftfahrzeugs gebildet sein. Beim Einsatz des Mehrwegeventils in einem Kühlfluidkreislauf kann das Mehrwegeventil im Allgemeinen dazu dienen, die Effizienz des Motors zu erhöhen, insbesondere in dessen Kaltstartphase und/oder bei kurzen Anfahrten beziehungsweise Fahrten. Das Mehrwegeventil kann beispielsweise den Durchfluss der Fluidströmung in Abhängigkeit von einer Fluidtemperatur und/oder einer Umgebungstemperatur steuern, um eine vordefinierte Fluidtemperatur zu regeln, insbesondere auf einem gewissen Niveau zu halten. Beispielsweise kann der Kühlfluidkreislauf einen Hauptkanal, in dem der Kühler zum Kühlen von von dem Motor kommenden Kühlfluid integriert ist, und einen Bypasskanal zum Umgehen des Kühlers umfassen. Beispielsweise kann der Bypasskanal derart gestaltet sein, dass das Kühlfluid ohne Beeinflussung, insbesondere Kühlung, durch den Kühler ungekühlt zurück zum Motor gelangen kann. Beispielsweise ist das Mehrwegeventil dazu eingerichtet, in einer Kaltstartphase, Aufheizphase oder Warmlaufphase des Motors, das von dem Motor kommende Kühlfluid ohne, dass es von dem Kühler gekühlt wird, zum Motor zurückzuführen, um das Aufwärmen des Motors zu beschleunigen. Bei zunehmendem Erwärmen des Motors, insbesondere im Volllastbetrieb, ist das Mehrwegeventil derart eingestellt, dass vom Motor kommendes erwärmtes Kühlfluid dem in dem Kühlfluidkreislauf integrierten Kühler zugeführt wird, bevor es wieder zurück zum Motor geleitet wird. Dadurch wird die Kühlung des Motors realisiert und insbesondere eine Überhitzung des Motors vermieden.

Das Mehrwegeventil umfasst ein Ventilgehäuse beispielsweise aus Metall oder Kunststoff, das beispielsweise mittels eines Kunststoff-Spritzgussverfahrens hergestellt ist. Das Ventilgehäuse besitzt wenigstens drei Fluidanschlüsse. Über die Fluidanschlüsse kann Fluidströmung in das Ventilgehäuse beziehungsweise aus dem Ventilgehäuse heraus gelangen. Beispielsweise ist das Mehrwegeventil als 3/2-Wegeventil realisiert. Dies bedeutet, dass das 3/2-Wegeventil drei Fluidanschlüsse, insbesondere zwei Fluidausgänge und einen Fluideingang, und zwei Betriebsstellungen, insbesondere Steuerzustände, besitzt. In den verschiedenen Betriebsstellungen können unterschiedliche Durchflussszenarien realisiert sein, wobei jeweils zwei, ein Paar bildende Fluidanschlüsse fluidal miteinander in Verbindung gebracht werden. Einer der wenigstens drei Fluidanschlüsse kann ein Motorfluideingang zum Empfangen von von dem Motor kommenden Kühlfluid sein. Der Motorfluideingang ist dazu eingerichtet, mit dem Motor verbunden zu werden, um das Kühlfluid über den Motorfluideingang in das Ventilgehäuse des Mehrwegeventils einzuleiten. Ein weiterer Fluidanschluss kann als Motorfluidausgang zum Ausgeben von Fluid an den Motor gebildet sein. Demnach kann auch der Motorfluidausgang mit dem Motor fluidal verbunden sein, um Fluid aus dem Ventilgehäuse über den Motorfluidausgang zurück zum Motor zu leiten. Das Ventilgehäuse kann als im Wesentlichen starre Struktur gebildet sein und Schnittstellen zum Verbinden mit weiteren kraftfahrzeugfesten Komponenten und/oder zum Befestigen des Mehrwegeventils an der Fahrzeugkarosserie oder dem Motor aufweisen.

Das erfindungsgemäße Mehrwegeventil umfasst ferner einen in dem Ventilgehäuse, insbesondere in einem von dem Ventilgehäuse begrenzten beziehungsweise definierten Gehäuseinnenraum, angeordneten Drehschieber zum Einstellen der Fluidströmung insbesondere bezüglich der wenigstens drei Fluidanschlüsse. Der Drehschieber kann ebenfalls als im Wesentlichen starre Struktur gebildet und/oder aus Kunststoff oder Metall hergestellt sein. Beispielsweise ist der Drehschieber mittels eines Kunststoff-Spritzgussverfahrens hergestellt. Der Drehschieber weist wenigstens zwei Fluidkanäle auf und ist dazu eingerichtet, in Abhängigkeit seiner Rotationsstellung bezüglich seiner Rotationsachse je zwei Fluidanschlüsse mittels eines Fluidkanals fluidal miteinander zu verbinden. Beispielsweise sind das Ventilgehäuse und der Drehschieber rotationsförmige Bauteile in Bezug auf die Rotationsachse. Durch Drehung des Drehschiebers um die Rotationsachse wird die Fluidströmung durch das Mehrwegeventil, insbesondere durch das Ventilgehäuse und den Drehschieber, eingestellt. Die wenigstens drei Fluidanschlüsse und die wenigstens zwei Fluidkanäle überlappen bezüglich einer quer zur Rotationsachse orientierten Querrichtung, insbesondere Radialrichtung, einander. Beispielsweise liegen die wenigstens drei Fluidanschlüsse und die wenigstens zwei Fluidkanäle in derselben Ebene bezüglich der Rotationsachse. Insbesondere können auf diese Weise Strömungsverluste vermieden beziehungsweise reduziert werden. Dies hängt damit zusammen, dass Umlenkungen der Fluidströmung weitestgehend reduziert beziehungsweise vermieden werden.

Erfindungsgemäß weist das Mehrwegeventil einen ersten Steuerzustand auf, in dem der Drehschieber bezüglich des Ventilgehäuses derart ausgerichtet ist, dass ein erster Fluidkanal ein erstes Paar Fluidanschlüsse fluidal miteinander verbindet und eine Fluidströmung durch den wenigstens einen weiteren Fluidkanal verhindert ist. Anders ausgedrückt ist der wenigstens eine weitere Fluidkanal in dem ersten Steuerzustand blind geschaltet. Dies bedeutet, dass in das Mehrwegeventil gelangende Fluidströmung im Wesentlichen ausschließlich durch den ersten Fluidkanal strömt und somit keine Fluidströmung in den wenigstens einen weiteren Fluidkanal gelangen kann. Des Weiteren weist das Mehrwegeventil wenigstens einen weiteren Steuerzustand auf, in dem eine Fluidströmung durch den ersten Fluidkanal unterbunden ist und wenigstens ein weiterer Fluidkanal ein weiteres Paar Fluidanschlüsse fluidal miteinander verbindet. Dies bedeutet, dass in dem wenigstens einem weiteren Steuerzustand der erste Fluidkanal blind geschalten ist, so dass durch diesen keine Fluidströmung gelangt. Die Fluidströmung in dem wenigstens einen weiteren Steuerzustand strömt im Wesentlichen ausschließlich durch den wenigstens einen weiteren Fluidkanal. Somit ist es möglich, strömungsverlustarm wenigstens zwei Steuerzustände zu realisieren. Des Weiteren ermöglicht es das erfindungsgemäße Mehrwegeventil, eine Fluidströmung gezielt und zuverlässig zu führen, ohne dass Strömungsverluste in Bezug auf Druck und/oder Volumen einhergehen. Beim Einsatz des Mehrwegeventils in einem Kühlfluidkreislauf ist es beispielsweise möglich, sämtliches von dem Motor kommendes Kühlfluid gezielt entweder ausschließlich zur Kühlung dem Kühler zuzuführen oder ausschließlich zum Beschleunigen der Aufheizphase des Motors diesem zurückzuführen. Dadurch lassen sich zum einen die Aufheiz- beziehungsweise Anlaufphase des Motors verkürzen und zum anderen die Kühleffizienz des Motors verbessern.

In einer beispielhaften Ausführungsform der vorliegenden Erfindung sind wenigstens ein Fluidanschluss als Fluideingang zum Einführen von Fluid in das Ventilgehäuse und wenigstens ein Fluidanschluss als Fluidausgang zum Abgeben von Fluid aus dem Ventilgehäuse ausgebildet, wobei der wenigstens eine weitere Fluidanschluss als Fluideingang oder als Fluidausgang ausgebildet ist. Beispielsweise bedeutet dies, dass in dem ersten Steuerzustand, in dem der Drehschieber eine erste Rotationsstellung bezüglich des Ventilgehäuses einnimmt, der eine Fluideingang mit einem der zwei Fluidausgänge mittels eines Fluidkanals fluidal verbunden ist, um eine Fluidströmung zu erlauben. In dem ersten Steuerzustand ist demnach der wenigstens eine weitere Fluidkanal und der weitere Fluidausgang blindgeschaltet, so dass keine Fluidströmung durch den wenigstens einen weiteren Fluidkanal beziehungsweise den weiteren Fluidausgang strömt. Des Weiteren kann vorgesehen sein, dass in dem wenigstens einem weiteren Steuerzustand, in dem der Drehschieber in wenigstens einer weiteren Rotationsstellung bezüglich des Ventilgehäuses ausgerichtet ist, der eine Fluideingang mit dem weiteren Fluidausgang mittels des weiteren Fluidkanals fluidal verbunden ist, um Fluidströmung zu realisieren. In diesem weiteren Steuerzustand ist dann der erste Fluidkanal und der erste Fluidausgang blindgeschaltet, so dass hierüber keine Fluidströmung stattfindet.

Gemäß einer weiteren beispielhaften Ausführungsform des erfindungsgemäßen Mehrwegeventils ist jeder Fluidkanal genau einem Paar Fluidanschlüsse zugeordnet. Insbesondere ist jeder Fluidkanal genau einem Paar Fluidanschlüsse derart zugeordnet, dass jeder Fluidkanal in genau einer Rotationsstellung des Drehschiebers genau ein Paar von Fluidanschlüssen fluidal miteinander verbindet, um eine Fluidströmung zwischen dem Paar von Fluidanschlüssen zu ermöglichen und Fluidströmung durch den weiteren Fluidkanal zu unterbinden. Im Falle von zwei Fluidkanälen und drei Fluidanschlüssen, das heißt einem ersten, zweiten und dritten Fluidanschluss, bedeutet dies, dass der erste Fluidkanal genau einem Paar Fluidanschlüsse zugeordnet ist, nämlich beispielsweise dem Paar aus erstem und zweitem Fluidanschluss, und der zweite Fluidkanal einem anderen Paar Fluidanschlüsse zugeordnet ist, nämlich in diesem Fall beispielsweise dem Paar aus erstem und drittem Fluidanschluss. Insbesondere durch die eindeutige Zuordnung von Fluidkanal und Fluidanschluss-Paar ist es möglich, die Fluidanschlüsse und/oder die Fluidkanäle jeweils in Bezug auf eine Strömungseffizienz beziehungsweise eine Vermeidung von Strömungsverlusten in Bezug auf Druck und/oder Volumen zu konstruieren und/oder zu dimensionieren. Jeder Fluidkanal kann beispielsweise optimal an die entsprechende Form und/oder Position der in dem Ventilgehäuse ausgebildeten Fluidanschlüsse abgestimmt sein.

Gemäß einer beispielhaften Weiterbildung des erfindungsgemäßen Mehrwegeventils sind die wenigstens zwei Fluidkanäle voneinander unabhängig, insbesondere fluidal voneinander getrennt. Anders ausgedrückt findet im Bereich des Drehschiebers kein Fluidaustausch zwischen den wenigstens zwei Fluidkanälen statt. Insbesondere münden die Fluidkanäle jeweils in das dem entsprechenden Fluidkanal zugeordnete Fluidanschluss-Paar. Des Weiteren kann vorgesehen sein, dass je zwei benachbarte Fluidkanäle von einer bezüglich der Rotationsachse des Drehschiebers quer orientierten Trennwand voneinander getrennt, insbesondere hermetisch voneinander abgedichtet, sind. Die Trennwand kann somit zur einen Seite quer zur Rotationsrichtung einem Fluidkanal und zur anderen, gegenüberliegenden Seite quer zur Rotationsrichtung einem weiteren Fluidkanal zugeordnet sein, beziehungsweise eine Fluidkanalbegrenzungswand bilden. In diesem Fall ist es die Trennwand, die gewährleistet, dass kein Fluidaustausch zwischen den Fluidkanälen untereinander stattfindet.

Gemäß einer weiteren beispielhaften Ausführung des erfindungsgemäßen Mehrwegeventils macht eine Axialerstreckung entlang der Rotationsachse des Drehschiebers der Fluidanschlüsse und/oder der Fluidkanäle wenigstens 50 % einer Gesamtaxialerstreckung des Drehschiebers aus. Unter Gesamtaxialerstreckung des Drehschiebers ist dabei vorzugsweise diejenige Gesamtaxialerstreckung beziehungsweise Axialabmessung zu verstehen, welche durch den ein Ventilglied bildenden Teil des Drehschiebers gebildet ist. Als Ventilglied ist vorzugsweise derjenige Teil des Drehschiebers zu verstehen, welcher mit dem Ventilgehäuse, insbesondere einem in dem Ventilgehäuse angeordneten, Ventilsitz zum Einstellen der Fluidströmung zusammenwirkt. Beispielsweise kann es vorgesehen sein, dass sich zusätzliche Komponenten, wie beispielsweise Antriebskomponenten und/oder Befestigungsstrukturen über die Axialerstreckung des Ventilgliedes des Drehschiebers hinauserstrecken. Beispielsweise beträgt die Axialerstreckung der Fluidanschlüsse und/oder der Fluidkanäle wenigstens 60 %, wenigstens 70 %, wenigstens 80 % oder wenigstens 90 % der Gesamtaxialerstreckung des Drehschiebers beziehungsweise insbesondere des Ventilglieds des Drehschiebers.

In einer weiteren beispielhaften Ausführung umfasst das Ventilgehäuse einen rotationsförmigen Ventilsitz, bezüglich dem der rotationsförmige Drehschieber drehbeweglich gelagert ist und/oder mit dem der Drehschieber zum Einstellen der Fluidströmung zusammenwirkt. Gemäß einer beispielhaften Weiterbildung bildet das Ventilgehäuse den Ventilsitz. Der Ventilsitz ist dann aus einem Stück mit dem Ventilgehäuse hergestellt. Gemäß einer beispielhaften weiteren Ausführung liegt beziehungsweise ist der Ventilsitz, der beispielsweise als ringförmiger Ventilsitz ausgebildet ist, quer zur Rotationsrichtung zwischen dem Drehschieber und dem Ventilgehäuse. Beispielsweise ist der Ventilsitz drehfest an dem Ventilgehäuse befestigt, insbesondere daran angeschweißt und/oder angeflanscht.

Gemäß einer beispielhaften weiteren Ausführung des erfindungsgemäßen Mehrwegeventils ist wenigstens ein Fluidkanal als Durchgangskanal, insbesondere als Durchgangsbohrung, gebildet. Der Durchgangsfluidkanal verbindet zwei am Außenumfang des Drehschiebers gebildete Fluidanschlussöffnungen miteinander. Beispielsweise besitzt der Fluiddurchgangsfluidkanal einen konstanten Durchströmungsquerschnitt, wobei insbesondere der Durchströmungsquerschnitt des Fluiddurchgangsfluidkanals dem Durchströmungsquerschnitt der Fluidanschlussöffnungen entspricht. Es wurde erfindungsgemäß herausgefunden, dass sich dadurch Strömungsverluste deutlich reduzieren beziehungsweise minimieren lassen.

Gemäß einer beispielhaften Weiterbildung der vorliegenden Erfindung besitzt wenigstens ein weiterer Fluidkanal einen sich entsprechend einer rotationsförmigen Außenkontur des Drehschiebers verändernden Durchströmungsquerschnitt. Dies kann dadurch realisiert sein, dass der wenigstens eine weitere Fluidkanal eine Fluidkanalbegrenzungswand aufweist, die entsprechend einer rotationsförmigen Außenkontur des Drehschiebers geformt ist, insbesondere die rotationsförmig gekrümmt ist. Insbesondere kann der wenigstens eine weitere Fluidkanal kontinuierlich nach außen hin offen sein. Dies bedeutet, dass der Fluidkanal nicht vollumfänglich geschlossen ist, insbesondere durch eine entsprechende Fluidkanalbegrenzungswandung des Drehschiebers begrenzt ist. Beispielsweise ist der wenigstens eine weitere Fluidkanal als von außen in das Vollmaterial des Drehschiebers eingebrachte Aussparung beziehungsweise Tasche realisiert. Dabei kann vorgesehen sein, dass der Ventilsitz und/oder das Ventilgehäuse den wenigstens einen weiteren Fluidkanal zur Festlegung des Durchströmungsquerschnitts begrenzt. Des Weiteren ist es möglich, dass der wenigstens eine weitere Fluidkanal in Umfangsrichtung wenigstens abschnittsweise nach außen hin durch eine Gehäusewandung begrenzt ist.

In einer beispielhaften Ausführung des erfindungsgemäßen Mehrwegeventils führt der Drehschieber beim Umschalten zwischen dem ersten Steuerzustand und dem wenigstens einen weiteren Steuerzustand eine Rotationsbewegung von weniger als 90°, insbesondere weniger als 60°, vorzugsweise um 45°, bezüglich der Rotationsachse durch. Dadurch ist es möglich, die Umschaltzeit zwischen den verschiedenen Steuerzuständen zu reduzieren. Alternativ ist es möglich, bei gleichbleibender Umschaltzeit, einen kostengünstigeren und/oder leistungsärmeren Drehantrieb für den Drehschieber zu verwenden, da eine reduzierte Umschaltgeschwindigkeit notwendig ist. Insbesondere ist eine Rotationsbewegung um 45°, bezüglich der Rotationsachse notwendig, so dass im Vergleich zu bekannten Mehrwegeventilen, bei denen Rotationsbewegungen um 90 notwendig sind, um verschiedene Steuerzustände einzunehmen, die Umschaltzeit um 50 % reduziert werden und/oder die Umschaltgeschwindigkeit um 50 % reduziert werden kann, so dass erhebliche Kosten eingespart werden können. Beispielsweise wird die 45°-Umschalt-Rotationsbewegung dann realisiert, wenn die Fluidanschlüsse um 90° bezüglich der Rotationsachse des Drehschiebers versetzt zueinander angeordnet sind. Der Winkel, den zwei benachbarte Fluidanschlüsse bezüglich der Rotationsachse des Drehschiebers aufspannen, kann als Teilungswinkel bezeichnet werden. Dabei kann vorgesehen sein, dass der Winkel der Umschalt-Rotationsbewegung zwischen den Steuerzuständen die Hälfte des Teilungswinkels beträgt. Des Weiteren kann vorgesehen sein, dass ein Umlenkwinkel eines Fluidkanals, d. h. derjenige Winkel, um den der entsprechende Fluidkanal die Fluidströmung innerhalb des Drehschiebers umgelenkt, dem Teilungswinkel entspricht.

Gemäß einer beispielhaften Weiterbildung des erfindungsgemäßen Mehrwegeventils ist ein Fluidkanal des Drehschiebers derart gestaltet, dass die Fluidströmung um 90° umgelenkt wird. Insbesondere ist der wenigstens eine weitere Fluidkanal, der in dem wenigstens einem weiteren Steuerzustand aktiv ist, derart gestaltet. Beispielsweise kann vorgesehen sein, dass der nach außen hin kontinuierlich offene, wenigstens eine weitere Fluidkanal jeweils fluidanschlussseitig, insbesondere fluidanschlussöffnungsseitig im Bereich des Drehschiebers, eine vorzugsweise konkav gekrümmte Innenkontur besitzt. Durch die konkav gekrümmte Innenkontur können Strömungsverluste minimiert beziehungsweise reduziert werden. Insbesondere beim Ein- beziehungsweise Ausleiten von Fluidströmung in beziehungsweise aus den Drehschieber über Fluidanschlüsse beziehungsweise die Fluidanschlussöffnungen erfährt die einströmende Fluidströmung sowie die ausströmende Fluidströmung eine kontinuierliche, leichte Umlenkung, so dass Staudrücke und insofern Strömungsverluste vermieden werden. Insofern kann sich auch kein Totvolumen ausbilden, in dem die Strömung im Wesentlichen vollständig die Geschwindigkeit beziehungsweise den Fluiddruck verliert.

In einer weiteren beispielhaften Ausführung des erfindungsgemäßen Mehrwegeventils ist ein Paar von Fluidanschlüssen fluchtend zueinander orientiert und/oder ein Fluidkanal derart gestaltet, dass beim Leiten und/oder Führen der Fluidströmung von einem Fluidanschluss zu einem weiteren Fluidanschluss die Fluidströmung keine Umlenkung erfährt. In diesem Steuerzustand treten im Wesentlichen gar keine Strömungsverluste auf. Gemäß einer beispielhaften Weiterbildung weist der Drehschieber eine Rotationsstellung auf, in der ein Paar von Fluidanschlüssen und der diesem Paar zugeordnete Fluidkanal zueinander fluchtend orientiert sind. Insofern kann die Fluidströmung im Wesentlichen vollständig ohne Strömungshindernis und/oder -umlenkung durch das gesamte Mehrwegeventil, das heißt durch das Ventilgehäuse und den Drehschieber, hindurchströmen.

In einer weiteren beispielhaften Ausführung des erfindungsgemäßen Mehrwegeventils entspricht ein Durchströmungsquerschnitt der Fluidanschlüsse einem Durchströmungsquerschnitt von wenigstens einem der Fluidkanäle und/oder einem Durchströmungsquerschnitt von einem Paar Fluidanschlussöffnungen eines Fluidkanals in dem Drehschieber. Dadurch, dass gleiche Durchströmungsquerschnitte vorgesehen sind, werden weiterhin Strömungsverluste vermieden beziehungsweise reduziert. Insbesondere sind keine Hindernisse, wie Prallflächen, und/oder Hinterschneidungen, die ein Totvolumen bilden können, gebildet.

In einer weiteren beispielhaften Ausführung eines erfindungsgemäßen Mehrwegeventils sind die Fluidkanäle derart gestaltet und/oder die Fluidkanäle jeweils mit dem einem Fluidkanal zugeordneten Paar von Fluidanschlüssen aufeinander abgestimmt, insbesondere formabgestimmt, dass die Fluidströmung strömungshindernisfrei, insbesondere kantenfrei, vorsprungsfrei und/oder totvolumenfrei, das Paar von Fluidanschlüssen und den diesem zugeordneten Fluidkanal passieren kann. Durch die derartige Ausgestaltung beziehungsweise Abstimmung aufeinander können weiterhin Strömungsverluste vermieden werden. Insbesondere werden Strömungsverwirbelungen vermieden, die beispielsweise an Kanten, Vorsprüngen und/oder Hinterschneidungen im Verlauf der Fluidströmung resultieren können.

Gemäß einem weiteren Aspekt der vorliegenden Erfindung, der mit den vorhergehenden Aspekten und beispielhaften Ausführungen kombinierbar ist, ist ein Fluidkreislauf, insbesondere ein Kühlfluidkreislauf, eines Kraftfahrzeugs bereitgestellt. Der Fluidkreislauf umfasst ein gemäß einem der zuvor beschriebenen Aspekte beziehungsweise beispielhaften Ausführungen ausgebildetes erfindungsgemäßes Mehrwegeventil. Ferner umfasst der Fluidkreislauf eine fluidführend an das Mehrwegeventil angeschlossene Fluidleitungsstruktur, um Fluidströmung in das Mehrwegeventil einzuleiten und/oder Fluidströmung aus dem Mehrwegeventil abzuleiten.

Die vorliegende Erfindung stellt außerdem einen Kühlfluidkreislauf zum Zubeziehungsweise Abführen eines Kühlfluids in beziehungsweise von einem Motor, insbesondere einem Verbrennungsmotor beziehungsweise einem elektrisch betriebenen Motor, eines Kraftfahrzeugs bereit. Der erfindungsgemäße Kühlfluidkreislauf umfasst einen einen Motorfluideingang und einen Motorfluidausgang verbindenden Hauptkanal, in dem ein Kühler integriert ist und über den dem Motor gekühltes Kühlfluid zuführbar ist. Während des Betriebs des Motors kann dieser dazu tendieren, sich zu stark zu erhitzen. Aus diesem Grund kann zur Vermeidung von Überhitzungen und/oder zur Erhöhung der Effizienz des Motors das gekühlte Kühlfluid dem Motor zugeführt werden.

Des Weiteren umfasst der Kühlfluidkreislauf einen Bypasskanal zum Umgehen des Kühlers. Mittels des Bypasskanals kann erwärmtes, den Motor verlassendes Kühlfluid dem Motor wieder zurückgeführt werden, ohne dass es durch den Kühler beeinflusst, insbesondere gekühlt, wurde. Dies kann beispielsweise bei einer Kaltstartphase, Warmlaufphase oder Anlaufphase und/oder bei kurzen Anfahrten beziehungsweise Fahrten nötig sein, um ein Erwärmen des Motors zu beschleunigen und/oder eine Effizienz des Motors zu erhöhen.

Des Weiteren umfasst der Kühlfluidkreislauf ein Mehrwegeventil, insbesondere ein 3/2-Wegeventil, zum Steuern einer Kühlfluidströmung in dem Kühlfluidkreislauf insbesondere zwischen Motor, insbesondere Verbrennungsmotor oder elektrisch betriebenem Motor, und Kühler eines Kraftfahrzeugs. Das Mehrwegeventil kann beispielsweise gemäß einem der zuvor beschriebenen Aspekte beziehungsweise beispielhaften Ausführungen ausgebildet sein. Das Mehrwegeventil weist einen als Kühlstellung ausgebildeten ersten Steuerzustand, indem dem Motor gekühltes Kühlfluid von dem Kühler über den Hauptkanal zugeführt wird und in dem Kühlfluidströmung durch den Bypasskanal verhindert ist, und einen als Bypassstellung ausgebildeten weiteren Steuerzustand auf, in dem dem Motor ungekühltes Kühlfluid über den Bypasskanal zugeführt wird und in dem Kühlfluidströmung durch den Hauptkanal verhindert ist. Somit ist es möglich, strömungsverlustarm wenigstens zwei Steuerzustände in dem Kühlfluidkreislauf zu realisieren. Des Weiteren ermöglicht es der erfindungsgemäße Kühlfluidkreislauf, eine Fluidströmung gezielt und zuverlässig zu führen, ohne dass Strömungsverluste in Bezug auf Druck und/oder Volumen einhergehen. In dem Kühlfluidkreislauf ist es beispielsweise möglich, sämtliches von dem Motor kommendes Kühlfluid gezielt entweder ausschließlich zur Kühlung dem Kühler zuzuführen oder ausschließlich zum Beschleunigen der Aufheizphase des Motors diesem zurückzuführen. Dadurch lassen sich zum einen die Aufheizbeziehungsweise Anlaufphase des Motors verkürzen und zum anderen die Kühleffizienz des Motors verbessern.

Bevorzugte Ausführungen sind in den Unteransprüchen gegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Fig. 1: eine perspektivische Ansicht einer beispielhaften Ausführung eines Drehschiebers eines erfindungsgemäßen Mehrwegeventils;
- Fig. 2: eine Schnittansicht des Drehschiebers gemäß Fig. 1, anhand der Ebene II;
- Fig. 3: eine Schnittansicht eines erfindungsgemäßen Mehrwegeventils in einem ersten Steuerzustand;
- Fig. 4: eine perspektivische Schnittansicht des Mehrwegeventils gemäß Fig. 3;
- Fig. 5: eine Schnittansicht eines erfindungsgemäßen Mehrwegeventils in einem weiteren Steuerzustand;
- Fig. 6: eine perspektivische Schnittansicht des Mehrwegeventils gemäß Fig. 5;
- Fig. 7: eine Prinzipskizze zur Einbausituation eines erfindungsgemäßen Mehrwegeventils in einer beispielhaften Ausführung eines erfindungsgemäßen Fluidkreislaufs, wobei sich das Mehrwegeventil in einem ersten Steuerzustand befindet; und
- Fig. 8: eine weitere Prinzipskizze gemäß Fig. 7, wobei sich das Mehrwegeventil in einem weiteren Steuerzustand befindet.

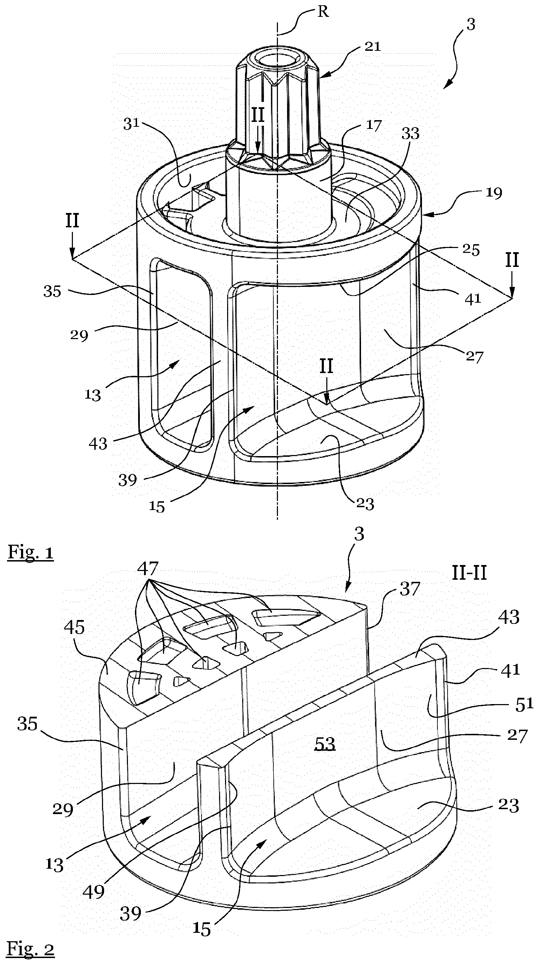

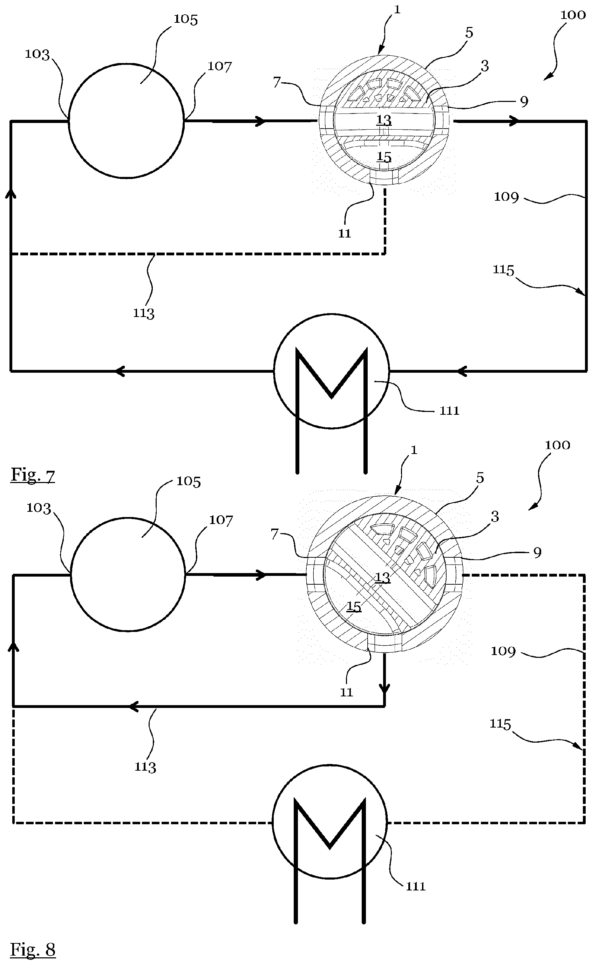

In der folgenden Beschreibung beispielhafter Ausführungen erfindungsgemäßer Mehrwegeventile und erfindungsgemäßer Fluidkreisläufe ist ein erfindungsgemäßes Mehrwegeventil im Allgemeinen mit der Bezugsziffer 1 versehen sowie ein erfindungsgemäßer Fluidkreislauf im Allgemeinen mit der Bezugsziffer 100. Die in den beispielhaften Ausführungen gemäß der Figuren 1 bis 8 abgebildeten Mehrwegeventile 1 dienen dazu, eine Fluidströmung in einem Fluidkreislauf 100, der beispielsweise ein Kühlmittelkreislauf sein kann, eines Kraftfahrzeugs zu steuern. Beispielsweise ist das Mehrwegeventil 1 auf Kunststoff vorzugsweise mittels eines Kunststoff-Spritzgussverfahrens hergestellt. Alternativ ist es denkbar, dass das Mehrwegeventil 1 mittels bekannter Fertigungsmaßnahmen beispielsweise aus Metall hergestellt ist. Unter Bezugnahme auf die Fig. 1 bis 6 werden beispielhafte Ausführungen erfindungsgemäßer Mehrwegeventile 1 gezeigt. Unter Bezugnahme auf die Fig. 7 und 8 werden beispielhafte Ausführungen erfindungsgemäßer Fluidkreisläufe 100 schematisch erläutert.

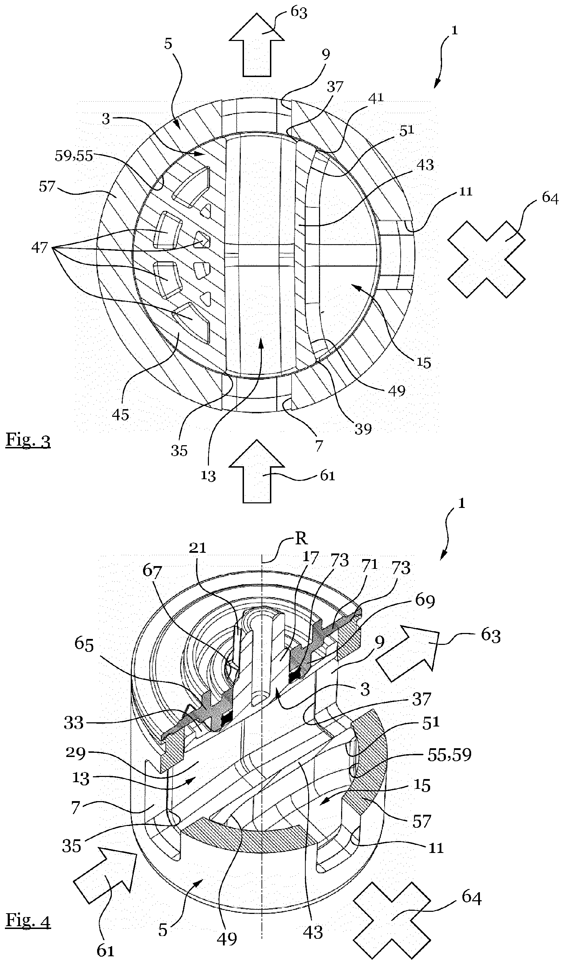

Erfindungsgemäße Mehrwegeventile 1 umfassen die folgenden Hauptkomponenten: Ein Ventilgehäuse 5; und einen in dem Ventilgehäuse 5 angeordneten und drehbeweglich gelagerten Drehschieber 3 zum Einstellen der Fluidströmung. Die in den Figuren abgebildeten beispielhaften Ausführungen der Erfindung zeigen beispielhaft ein 3/2-Wegeventil, wobei die Ziffer 3 die Anzahl an Fluidanschlüssen und die Ziffer 2 die Anzahl an Schaltstellungen beziehungsweise Steuerzuständen angibt. Das Ventilgehäuse 5 umfasst wenigstens drei Fluidanschlüsse 7, 9, 11, auf die in Bezug auf die Fig. 3 ff näher eingegangen wird. Der Drehschieber 3 umfasst wenigstens zwei Fluidkanäle 13, 15 und ist dazu eingerichtet, in Abhängigkeit seiner Rotationsstellung bezüglich seiner Rotationsachse R je zwei Fluidanschlüsse 7, 9 beziehungsweise 7, 11 mittels eines Fluidkanals 13 beziehungsweise 15 fluidal miteinander zu verbinden, wobei in Abhängigkeit der Rotationsstellung des Drehschiebers 3 verschiedene Steuerzustände des Mehrwegeventils 1 eingenommen werden können, um verschiedene Durchflussszenarien zu ermöglichen und die Fluidströmung innerhalb des Fluidkreislaufs 100 wie gewünscht zu leiten beziehungsweise umzulenken.

In Fig. 1 ist eine beispielhafte Ausführung eines Drehschiebers 3 eines erfindungsgemäßen Mehrwegeventils 1 in perspektivischer Ansicht abgebildet. Der Drehschieber 3 ist als rotationsförmiges Bauteil bezüglich der Rotationsachse R konzipiert und weist eine im Wesentlichen zylindrische Grundstruktur 19 auf. Konzentrisch zur Rotationsachse R angeordnet und somit im Zentrum des Drehschiebers 3 liegend, ist eine im Wesentlichen zylindrische Mitnehmerwelle 17 vorgesehen, die mit einem nicht dargestellten Stellantrieb zum Stellen des Mehrwegeventils 1 gekoppelt ist. Zur Kraftübertragung zwischen Antrieb und Drehschieber 3, das heißt zum Stellen des Drehschiebers 3, weist die drehfest mit einem Ventilglied 19, das die im Wesentlichen zylindrische Grundstruktur des Drehschiebers 3 bildet, des Drehschiebers 3 verbundene Mitnehmerwelle 17 an einem Ende eine Vorsprung-Vertiefung-Struktur 21 auf, die beispielsweise ein Ritzel 21 sein kann. Der Drehschieber 3 umfasst zwei Fluidkanäle 13, 15, über die die Fluidströmung durch den Drehschieber 3 hindurch gelangen kann. Wie in Fig. 1 zu sehen ist, sind die Fluidkanäle 13, 15 in der zylindrischen Grundstruktur beziehungsweise in dem Ventilglied 19 gebildet. Eine Axialerstreckung entlang der Rotationsachse R des Drehschiebers 3 der Fluidanschlüsse 13, 15 ist im Wesentlichen gleich groß und beträgt wenigstens 50 % einer Gesamtaxialerstreckung der zylindrischen Grundstruktur 19 des Drehschiebers: in Fig. 1 etwa 80 %.

Der Fluidkanal 13, der als Durchgangskanal durch den Drehschieber 3 hindurch gebildet ist, umfasst einen im Wesentlichen rechteckigen Querschnitt, der entlang der Längserstreckung des Fluidkanals 13 im Wesentlichen konstant ist. Der Fluidkanal 13 besitzt somit einen konstanten Durchströmungsquerschnitt für die Fluidströmung. Der Fluidkanal 15 ist an einem Außenumfang des Drehschiebers 3 beziehungsweise der zylindrischen Grundstruktur 19 angeordnet und nach außen hin offen. Dadurch besitzt der Fluidkanal 15 einen sich entsprechend der rotationsförmigen Außenkontur des Drehschiebers 3 beziehungsweise der zylindrischen Grundstruktur 19 verändernden Durchströmungsquerschnitt. Somit ist der Fluidkanal 15 beziehungsweise dessen Durchströmungsquerschnitt innerhalb des Fluidkanals 15 von dem Drehschieber 3 durch ebene, im Wesentlichen parallel zueinander liegende und in Rotationsrichtung R weisende Basisflächen 23, 25, die den Fluidkanal 15 in Rotationsrichtung R begrenzen, und eine den Fluidkanal 15 quer zur Rotationsrichtung R begrenzende Innenaxialwand 27 gebildet beziehungsweise begrenzt. Im Bereich eines Außenumfangs des Drehschiebers 3 ist keine Begrenzungswand für den Fluidkanal 15 vorgesehen, so dass dieser zur Außenseite hin offen ist. Im Gegensatz dazu besitzt der Fluidkanal 13 eine umfänglich begrenzende Fluidkanalwandung 29.

Ferner ist in Fig. 1 zu erkennen, dass der Drehschieber 3 einen in Rotationsachsenrichtung R über eine Grundfläche 33 des Drehschiebers 3axial vorstehenden Ringrand 31 besitzt, welcher die Mitnehmerwelle 17 in einem Abstand umläuft.

An dem zylindrischen Außenumfang des Drehschieber 3 beziehungsweise der zylindrischen Grundstruktur 19 münden die Fluidkanäle 13, 15 in jeweils zwei an der Außenseite ausgebildete Fluidanschlussöffnungen 35, 37 beziehungsweise 39, 41. Die jeweiligen Fluidanschlussöffnungen 35, 37, 39, 41 sind dabei derart gebildet beziehungsweise dimensioniert, dass über die Fluidanschlussöffnungen 35 bis 41 einbeziehungsweise austretende Fluidströmung im Wesentlichen strömungshindernisfrei, also kantenfrei, vorsprungsfrei und/oder totvolumenfrei, in den beziehungsweise aus dem entsprechenden Fluidkanal 13, 15 gelangen kann. Es ist ferner in Fig. 1 zu erkennen, dass die beiden Fluidkanäle 13, 15 voneinander unabhängig sind, oder anders ausgedrückt voneinander fluidal getrennt sind. Gemäß der Ausführungsform in Fig. 1 ist dies dadurch realisiert, dass eine bezüglich der Rotationsachse R quer orientierte Trennwand 43 die Fluidkanäle 13, 15 strukturell voneinander trennt, insbesondere diese hermetisch voneinander abdichtet. Dabei bildet eine in Richtung des Fluidkanals 15 weisende Seite der Trennwand 43 die Axialinnenwand 27, die den Fluidkanal 15 in Richtung quer zur Rotationsachse R begrenzt, und eine der Axialinnenwand 27 gegenüberliegende Seite der Trennwand 43 einen den Fluidkanal 13 quer zur Rotationsachse R begrenzende Wandungsabschnitt der Fluidkanalwandung 29.

In Fig. 2 ist eine perspektivische Schnittansicht gemäß der Ebene II aus Fig. 1 gebildet, wobei der Drehschieber 3 im Wesentlichen auf halber Axialhöhe bezüglich der Rotationsachse R geschnitten ist. Es ist in Fig. 2 insbesondere zu erkennen, dass sich die Trennwand 43 vollständig durch den Drehschieber 3 hindurch erstreckt, so dass die Fluidkanäle 13, 15 vollständig fluidal und strukturell voneinander getrennt sind. Anders ausgedrückt münden die Fluidkanäle 13, 15 im Bereich des Drehschiebers 3 nicht ineinander. Das bedeutet, dass kein Fluidaustausch zwischen Fluidströmung des Fluidkanals 13 und Fluidströmung des Fluidkanals 15 einhergehen kann. An einer quer zur Rotationsachse R betrachteten, gegenüberliegenden Seite des Fluidkanals 15 ist der Drehschieber 3 beziehungsweise die zylindrische Grundstruktur 19 im Wesentlichen aus Vollmaterial gebildet und bildet einen teilzylindrischen Außenwandabschnitt 45. Der im Wesentlichen aus Vollmaterial bestehende Außenwandabschnitt 45 weist mehrere sich in Rotationsachsenrichtung R durch den Drehschieber 3 erstreckende Hohlräume 47 auf, deren Querschnitt unterschiedlich ist und an eine Rotationsform des Drehschieber 3 angepasst ist. Innere, das heißt näher an der Rotationsachse R angeordnete Hohlräume 47 besitzen dabei einen kleineren Querschnitt als außenseitige Hohlräume 47. Die Hohlräume 47 tragen zur Gewichtsreduzierung bei.

In Fig. 2 ist ferner zu erkennen, dass die Trennwand 43, insbesondere die Axialinnenwand 27 des Fluidkanals 15, im Bereich der Fluidanschlussöffnungen 39, 41 leicht konkav gekrümmt ist. Die sich dadurch ergebenden Krümmungswandabschnitte 49, 51 münden einstückig in einen Verbindungswandabschnitt 53, in dem die Trennwand 43 einen konstanten Querschnitt besitzt.

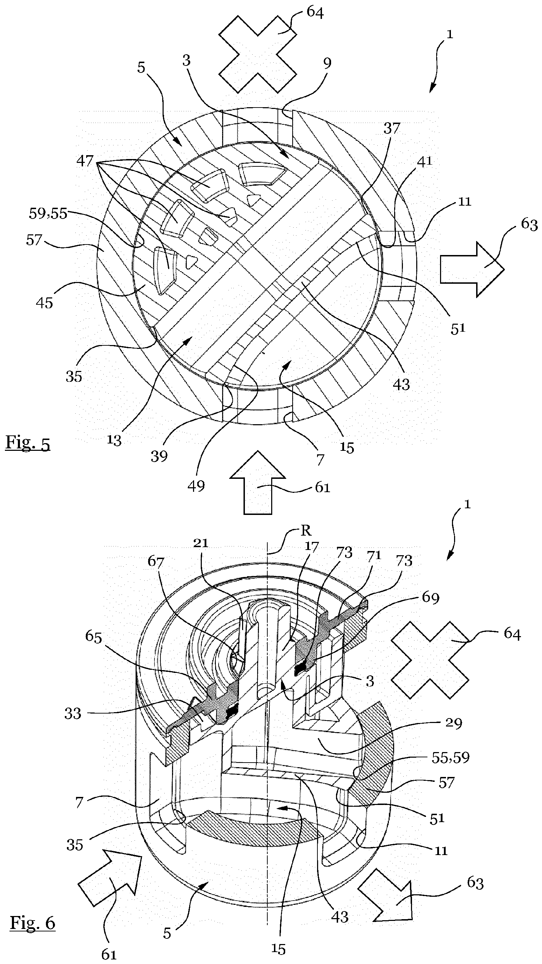

In Bezug auf die Fig. 3 bis 6 wird eine beispielhafte Ausführung eines erfindungsgemäßen Mehrwegeventils 1 anhand zweier Steuerzustände des Mehrwegeventils 1 erläutert, wobei die Fig. 3 und 4 einen ersten Steuerzustand und die Fig. 5 und 6 einen zweiten Steuerzustand des Mehrwegeventils 1 zeigen.

Wie aus einer Zusammenschau der Fig. 3 und 4 ersichtlich ist, ist das Ventilgehäuse 5 im Wesentlichen hohlzylindrisch und rotationsförmig gebildet. Wenigstens zu einer in Rotationsrichtung R weisenden Stirnseite ist das Gehäuse 5 zur Umgebung hin offen, um ein Montieren beziehungsweise Einsetzen des Drehschiebers 3 in einen Gehäuseinnenraum 55 zu ermöglichen. In Fig. 3 ist zu sehen, dass das Ventilgehäuse 5 eine ringzylindrische Gehäusewand 57 besitzt, die umlaufend um den Drehschieber 3 sich erstreckt, geschlossen ist und einen konstanten Querschnitt besitzt. An einer nach innen gewandten, den Gehäuseinnenraum 55 begrenzenden Gehäuseinnenwandung 59 umfasst das Ventilgehäuse 5 einen rotationsförmigen Ventilsitz, bezüglich dem der rotationsförmige Drehschieber 3 drehbeweglich gelagert ist. Quer zur Rotationsrichtung R ist der Drehschieber 3 geringfügig kleiner bemessen, um das Einsetzen des Drehschiebers 3 in den Gehäuseinnenraum 55 zu ermöglichen, wobei klar ist, dass Dichtungselemente sowie Gleitführungselemente zwischen Außenumfang des Drehschiebers 3 und Ventilsitz 59 vorgesehen sein können, um einerseits eine reibungsarme Relativrotation des Drehschiebers 3 bezüglich des Ventilgehäuses 5 zu gewährleisten und andererseits zu vermeiden, dass Fluidströmung in den Zwischenbereich zwischen Drehschieber 3 und Ventilgehäuse 5 gelangen kann.

Wie bereits erwähnt, ist der Drehschieber 3 dazu eingerichtet, in Abhängigkeit seiner Rotationsstellung bezüglich der Rotationsachse R je zwei Fluidanschlüsse 7, 9 beziehungsweise 7, 11 mittels eines Fluidkanals 13, 15 fluidal zu verbinden, um eine Fluidströmung, die in den Fig. 3 bis 6 durch Pfeile angedeutet ist, durch einen Fluidkanal 13, 15 zu ermöglichen und eine Fluidströmung durch den weiteren Fluidkanal 15, 13 und entsprechend durch einen weiteren Fluidanschluss zu verhindern, was schematisch durch ein großes X in den Figuren angedeutet ist.

Bei der in Fig. 3 beziehungsweise 4 dargestellten Stellung des Drehschiebers 3 nimmt das Mehrwegeventil 1 einen ersten Steuerzustand ein. In dem ersten Steuerzustand ist der Drehschieber 3 bezüglich des Ventilgehäuses 5 so ausgerichtet, dass der erste Fluidkanal 13 ein erstes Paar Fluidanschlüsse 7, 9 fluidal miteinander verbindet, um eine Eingangsfluidströmung 61 durch den Drehschieber 3 zu leiten, so dass die Fluidströmung den Drehschieber 3 beziehungsweise das Ventilgehäuse 5 an dem Fluidanschluss 9, der dann einen Fluidausgang 9 bildet, als Fluidausgangsströmung 63 verlassen kann. Bei der konstruktiven Ausgestaltung des Drehschiebers 3 beziehungsweise des Gehäuses 5 ist zum einen wesentlich, dass ein Durchströmungsquerschnitt der Fluidanschlüsse 7, 9 im Wesentlichen einem Durchströmungsquerschnitt des Fluidkanals 13 entspricht. Dadurch ist sichergestellt, dass möglichst wenig Strömungsverluste einhergehen, die die Effizienz des Ventils 1 verringern würden. Der Fluidkanal 13 ist außerdem so gestaltet, dass in dem in den Fig. 3 und 4 dargestellten ersten Steuerzustand die Fluidströmung 61 im Wesentlichen keine Umlenkung erfährt und im Wesentlichen vollständig geradlinig durch den Fluideingangsanschluss 7, den Fluiddurchgangskanal 13 und den Fluidausgangsanschluss 9 hindurchströmen kann. Des Weiteren ist entscheidend für die Funktion des Mehrwegeventils 1, dass beim Einnehmen des in den Fig. 3 und 4 dargestellten Steuerzustands des Mehrwegeventils 1, in dem Fluidströmung durch den Fluidkanal 13 ermöglicht ist, keine Fluidströmung durch den weiteren, zweiten Fluidkanal 15 stattfindet (Bezugsziffer 64). Dies ist dadurch realisiert, dass die Trennwand 43 zum Einen so positioniert ist, dass die über den Fluideingangsanschluss 7 einströmende Fluideingangsströmung 61 nicht in den Fluidkanal 15 gelangen kann, und zum anderen durch die Bemessung und Ausgestaltung der Trennwand 43, die die beiden Fluidkanäle 13, 15 vollständig fluidal voneinander trennt und mit ihren Stirnflächen im Dicht- beziehungsweise Gleitkontakt mit dem Ventilsitz 59 steht.

In Fig. 4 ist eine perspektivische Ansicht des Mehrwegeventils 1 gemäß dem ersten Steuerzustand nach Fig. 3 abgebildet, wobei ein Teil des Mehrwegeventils 1 herausgeschnitten ist, um die Innenstruktur des Mehrwegeventils 1 zu verdeutlichen.

In Fig. 4 ist eine weitere Eigenschaft erfindungsgemäßer Mehrwegeventile 1 zu erkennen, wonach die Fluidanschlüsse 7, 9, 11 und die Fluidkanäle 13 beziehungsweise 15 bezüglich einer quer zur Rotationsachse R orientierten Querrichtung, insbesondere Radialrichtung, einander überlappen. Beispielsweise, wie es in den Figuren dargestellt ist, überlappen die Fluidanschlüsse 7, 9, 11 und die Fluidkanäle 13, 15 in Querrichtung im Wesentlichen vollständig, wobei ein Fluidanschlusspaar 7, 9 und der diesem Paar 7,9 zugeordnete Fluidkanal 13 in dem ersten Steuerzustand (Fig. 3, Fig. 4) im Wesentlichen vollständig zueinander fluchtend ausgebildet und orientiert sind. Anders ausgedrückt befinden sich die Fluidanschlüsse 7, 9, 11 und die Fluidkanäle 13, 15 auf gleicher Ebene in Bezug auf die Rotationsachse R.

Wie in Fig. 4 abgebildet ist, kann das Mehrwegeventil 1 einen Gehäusedeckel 65 umfassen, der quer zur Rotationsachse R, das heißt in Quer- beziehungsweise Radialrichtung, im Wesentlichen die gleiche Außenumfangsabmessung wie das Ventilgehäuse 5 besitzt. Der Gehäusedeckel 65 liegt teilweise auf dem Ventilgehäuse 5 und teilweise auf dem Drehschieber 3 auf. Der Gehäusedeckel 65 ist plattenartig konzipiert und weist in seinem Zentrum eine Durchgangsöffnung 67 zum Hindurchführen der Mitnehmerwelle 17 des Drehschiebers 3 auf. Ein innerer Ringrand 69 umläuft die Durchgangsbohrung 67 und steht in Rotationsrichtung R derart von der Grundstruktur 71 des Gehäusedeckels 65 vor, dass dieser auf dem Drehschieber 3 aufsteht. Zwischen dem Ringrand 69 und der Mitnehmerwelle 17 ist ein Dichtungs- und/oder Dämpfungselement 73 angeordnet, welches ebenfalls umlaufend bezüglich der Rotationsachse R ausgebildet sein kann. Ein äußerer, umlaufender Auflageabschnitt 73 des Gehäusedeckels 67 liegt flächig auf dem zylindrischen Ringrand 57 des Ventilgehäuse 5 auf und schließt beispielsweise bündig mit diesem quer zur Radialrichtung R ab.

In Bezug auf die Fig. 5, 6 ist ein weiterer, zweiter Steuerzustand eines erfindungsgemäßen Mehrwegeventils 1 gezeigt. Im Gegensatz zu dem Steuerzustand gemäß den Fig. 3, 4 ist in den Fig. 5, 6 der Drehschieber 3 bezüglich der Rotationsachse R um 45° gedreht. Dies bedeutet, dass zum Einnehmen verschiedener Schaltbeziehungsweise Steuerzustände des Mehrwegeventils 1 der Drehschieber 3 um die Rotationsachse R um 45° zu drehen ist. In den Fig. 5, 6 stellt der Drehschieber 3 eine fluidale Verbindung zwischen einem weiteren Fluidanschlusspaar, nämlich dem Fluideingangsanschluss 7 und dem Fluidausgangsanschluss 11, her und zwar über den weiteren, zweiten Fluidkanal 15. In diesen Steuerzustand ist der erste Fluidkanal 13 blind geschaltet. Das bedeutet, dass keine Fluidströmung durch den Fluidkanal 13 beziehungsweise über den Fluidausgangsanschluss 9 möglich ist beziehungsweise bereitgestellt ist. Die Fluideingangsströmung 61, die über den Fluideingangsanschluss 7 das Mehrwegeventil 1 erreicht, wird ausschließlich beziehungsweise vollständig über den Fluidkanal 15 geführt, der die Fluidströmung zu dem Fluidausgangsanschluss 9 leitet, in dem die Fluideingangsströmung 63, das Ventilgehäuse 5 wieder verlässt. Es ist zu erkennen, dass der Fluidkanal 15 aufgrund seiner Struktur eine Umlenkung der Fluidströmung um 90°erzielt. Dabei ermöglicht die Ausgestaltung des Fluidkanals 15 und zusätzlich die Abstimmung der Strömungsquerschnitte zwischen Fluidkanal 15 und den entsprechenden Fluidanschlüssen 7, 11 eine besonders strömungsverlustarme beziehungsweise -freie Führung der Fluidströmung. Über die Krümmungswandabschnitte 49, 51 der Trennwand 43, die im Wesentlichen für die Umlenkung der Fluidströmung verantwortlich ist, welche nur leicht gekrümmt sind, erfährt die Fluidströmung kontinuierlich eine geringfügige Umlenkung hinein in den Fluidkanal 15 und entsprechend wieder aus dem Fluidkanal 15 hinaus. Die entsprechenden Übergänge zwischen Fluidanschluss 7 gehäuseseitig und Fluidanschlussöffnung 39 drehschieberseitig beziehungsweise Fluidanschlussöffnung 41 drehschieberseitig und Fluidanschluss 11 gehäuseseitig sind derart gestaltet, dass die Fluidströmung im Wesentlichen kanten-, vorsprungs- und/oder totvolumenfrei durch Gehäuse 5 und Drehschieber 3 hindurchströmen kann. Im Übrigen kann auf die Ausführungen zu dem Steuerzustand gemäß den Fig. 3 und 4 verwiesen werden.

In den Fig. 7 und 8 sind schematisch erfindungsgemäße Fluidkreisläufe 100 gezeigt, wobei in Fig. 7 ein erfindungsgemäßes Mehrwegeventil 1, das in den Fluidkreislauf 100 eingebunden ist, in einem ersten Steuerzustand und in Fig. 8 in einem zweiten Steuerzustand vorliegt. Beispielhaft ist der Fluidkreislauf 100 in den Fig. 7 und 8 als Kühlmittelkreislauf 100 realisiert, der einen einen Motorfluideingang 103 eines Motors 105 eines Kraftfahrzeugs (nicht dargestellt) und einen Motorfluidausgang 107 des Motors 105 verbindenden Hauptkanal 109 besitzt, in den ein Kühler 111 integriert ist. Der Kühler 111 ist dazu eingerichtet, dem Motor 105 gekühltes Kühlfluid zuzuführen.

Ferner umfasst der Kühlmittelkreislauf 100 einen Bypasskanal 113 zum Umgehen des Kühlers 111. Über den Bypasskanal 113 kann von dem Motor 105 kommendes Kühlfluid ungekühlt, das heißt ohne Einwirkung durch den Kühler 111, zum Motor 105 zurückgeführt werden.

In den Kühlmittelkreislauf 100 ist, wie bereits erwähnt, ferner ein erfindungsgemäßes Mehrwegeventil 1 eingebunden. Das Mehrwegeventil 1 ist dazu eingerichtet, in einem ersten Steuerzustand, einem sogenannten Kühlzustand beziehungsweise in einer Kühlstellung, dem Motor 105 gekühltes, vom Kühler 111 kommendes Kühlfluid zuzuführen und in einer zweiten Stellung beziehungsweise in einem zweiten Steuerzustand, der sogenannten Bypassstellung beziehungsweise dem Bypasszustand, dem Motor 105 ungekühltes, vom Motor 105 kommendes Kühlfluid zurückzuführen.

In Fig. 7 ist schematisch der Kühlzustand des Mehrwegeventils 1 gezeigt, in dem der Bypasskanal 113 vollständig geschlossen ist und der Hauptkanal 109 vollständig geöffnet ist. In Fig. 8 ist wiederum die Bypassstellung schematisch abgebildet, in der das Mehrwegeventil 1 derart gestellt ist, dass es den Bypasskanal 113 vollständig freigibt und den Hauptkanal 109 vollständig verschließt. Das Gehäuse 5 des Mehrwegeventils 1 umfasst einen als Motorfluideingang ausgebildeten Fluidanschluss 7 zum Empfangen von von dem Motor 105 kommenden Kühlfluid und einen als Motorfluidausgang ausgebildeten Fluidanschluss 9 zum Abgeben von Kühlfluid an den Kühler 111. Des Weiteren umfasst das Gehäuse 5 einen mit dem Motorfluideingang 103 des Motors 105 verbundenen beziehungsweise zu verbindenden als Motorfluidausgang realisierten Fluidanschluss 11, und zwar mittels des Bypasskanals 113.

Durch die Integration eines erfindungsgemäßen Mehrwegeventils 1 in einen erfindungsgemäßen Kühlmittelkreislauf 100 kann die Effizienz eines Verbrennungsmotors 105 eines Kraftfahrzeugs deutlich erhöht werden. Beispielsweise kann das Betriebsverhalten des Verbrennungsmotors in der Kaltstartphase beeinflusst werden. Beispielsweise kann mittels des Mehrwegeventils 1 im Kühlmittelkreislauf 100 von Kraftfahrzeugen abhängig von der Kühlfluidtemperatur und/oder Umgebungstemperatur eine Strömung des Kühlfluids durch den Bypasskanal 113 beziehungsweise den Hauptkanal 109 eingestellt werden, um verschiedene Durchflussszenarien zu realisieren. Dabei kann vorgesehen sein, dass bis zu einer vorbestimmten Temperatur, insbesondere Schalttemperatur des Kühlfluids und/oder der Umgebung eine Kühlfluidströmung durch den Bypasskanal 113 zurück zum Motor 105 geführt wird, beispielsweise bei einem Kaltstart beziehungsweise in einer Warmlaufphase. Sobald die Kühlfluidtemperatur und/oder Umgebungstemperatur die vorbestimmte Schalttemperatur erreicht hat, soll die Kühlfluidströmung in den Hauptkanal 109 zum Kühlen mittels des Kühlers 111 umgeleitet werden, bevor die gekühlte Kühlfluidströmung wieder dem Motor 105 zugeführt wird. Zum Steuern beziehungsweise Aktivieren des Mehrwegeventils 1 können bekannte Stellantriebe beziehungsweise Aktuatoren eingesetzt werden, denen auch eine Regelsteuerlogik hinterlegt sein kann (nicht dargestellt).

In Fig. 7, in der der erste Steuerzustand des Mehrwegeventils gezeigt ist, der eine Kühlstellung des Motors 105 realisiert, gelangt die mittels des durchgezogenen Pfeils angedeutete Fluidströmung über den Fluidkanal 13 und das entsprechende, diesem zugeordnete Paar von Fluidanschlüssen 7, 9 zum Kühler 111 und schließlich zurück zum Motor 105, um diesen zu kühlen. Der Fluidkanal 15 ist blind geschalten beziehungsweise führt keine Fluidströmung.

Im Gegensatz dazu ist in Fig. 8 der zweite Steuerzustand gezeigt, der beispielhaft eine Bypassstellung abbildet. Die Fluidströmung wird vollständig über den Fluidkanal 15 und das dem Fluidkanal 15 zugeordneten Paar von Fluidanschlüssen 7, 11 direkt zum Motor 105 zurückgeführt, ohne dass eine Kühlung durch den Kühler 111 erfolgt. Der Hauptkanal 109 wird folglich umgangen. In diesem Zustand ist nun der Fluidkanal 13 blind geschaltet, so dass keine Fluidströmung durch den Fluidkanal 13 strömt. Der jeweils nicht aktive Kanal von Hauptkanal 109 und Bypasskanal 113 ist durch eine strichlierte Linie in den Figuren 7, 8 abgebildet. Der Hauptkanal 109 beziehungsweise der Bypasskanal 113, die auch als Fluidleitungen bezeichnet werden können, sind Teil einer Fluidleitungsstruktur 115 des Kühlmittelkreislaufs 100, die für die Fluidführung verantwortlich ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Mehrwegventil
- 3: Drehschieber
- 5: Ventilgehäuse
- 7, 9, 11: Fluidanschluss
- 13, 15: Fluidkanal
- 17: Mitnehmerwelle
- 19: Zylindrische Grundstruktur/Ventiglied
- 21: Ritzel
- 23, 25: Fluidkanalbasisflächen
- 27: Innenaxialwand
- 29: Fluidkanalwandung
- 31: Rinnrand
- 33: Basisfläche
- 35, 37, 39, 41: Fluidanschlussöffnung
- 43: Trennwand
- 45: Teilzylindrische Gehäusewand
- 47: Hohlraum
- 49,51: Krümmungswandabschnitt
- 53: Verbindungswandabschnitt
- 55: Gehäusehohlraum
- 57: Ringzylindrische Gehäusewand
- 59: Ventilsitz / Gehäuseinnenwandung
- 61: Fluideingangsströmung
- 63: Fluidausgangsströmung
- 64: Blockierte Fluidströmung
- 65: Gehäusedeckel
- 67: Durchgangsöffnung
- 69: Vorsprung
- 71: Grundstruktur
- 73: Auflageabschnitt
- 73: Dichtungs- und/oder Dämpfungselement
- 100: Fluidkreislauf
- 103: Motorfluideingang
- 105: Motor
- 107: Motorfluidausgang
- 109: Hauptkanal
- 111: Kühler
- 113: Bypasskanal
- 115: Fluidleitungsstruktur
- R: Rotationsachse

## Patentansprüche

1. Mehrwegeventil (1) zum Steuern einer Fluidströmung in einem Fluidkreislauf (100), insbesondere einem Kühlfluidkreislauf, eines Kraftfahrzeugs, umfassend:
- ein Ventilgehäuse (5) mit wenigstens drei Fluidanschlüssen (7, 9, 11);
- einen in dem Ventilgehäuse (5) angeordneten Drehschieber (3) zum Einstellen der Fluidströmung, der wenigstens zwei Fluidkanäle (13, 15) aufweist und dazu eingerichtet ist, in Abhängigkeit seiner Rotationsstellung bezüglich seiner Rotationsachse (R) je zwei Fluidanschlüsse mittels eines Fluidkanals fluidal miteinander zu verbinden, wobei die wenigstens drei Fluidanschlüsse (7, 9, 11) und die wenigstens zwei Fluidkanäle (13, 15) bezüglich einer quer zur Rotationsachse (R) orientierten Querrichtung einander überlappen;
wobei das Mehrwegeventil (1) einen ersten Steuerzustand aufweist, in dem der Drehschieber (3) bezüglich des Ventilgehäuses (5) derart ausgerichtet ist, dass ein erster Fluidkanal (13, 15) ein erstes Paar Fluidanschlüsse fluidal miteinander verbindet und eine Fluidströmung durch den wenigstens einen weiteren Fluidkanal (15, 13) verhindert ist, und wenigstens einen weiteren Steuerzustand aufweist, in dem eine Fluidströmung durch den ersten Fluidkanal (13, 15) unterbunden ist und wenigstens ein weiterer Fluidkanal (15, 13) ein weiteres Paar Fluidanschlüsse fluidal miteinander verbindet.

2. Mehrwegeventil (1) nach Anspruch 1, wobei wenigstens ein Fluidanschluss als Fluideingang zum Einführen von Fluid in das Ventilgehäuse (5) und wenigstens ein Fluidanschluss als Fluidausgang zum Abgeben von Fluid aus dem Ventilgehäuse (5) ausgebildet sind, wobei der wenigstens eine weitere Fluidanschluss als Fluideingang oder als Fluidausgang ausgebildet ist.

3. Mehrwegeventil (1) nach Anspruch 1 oder 2, wobei jeder Fluidkanal genau einem Paar Fluidanschlüsse zugeordnet ist, insbesondere derart zugeordnet ist, dass jeder Fluidkanal in genau einer Rotationsstellung des Drehschiebers (3) genau ein Paar von Fluidanschlüssen (7, 9, 11) fluidal miteinander verbindet, um eine Fluidströmung zwischen dem Paar von Fluidanschlüssen (7, 9, 11) zu ermöglichen und Fluidströmung durch den weiteren Fluidkanal zu unterbinden.

4. Mehrwegeventil (1) nach einem der vorstehenden Ansprüche, wobei die wenigstens zwei Fluidkanäle (13, 15) unabhängig voneinander sind, insbesondere fluidal voneinander getrennt sind, wobei insbesondere je zwei benachbarte Fluidkanäle (13, 15) von einer bezüglich der Rotationsachse (R) quer orientierten Trennwand (43) voneinander getrennt, insbesondere hermetisch voneinander abgedichtet, sind.

5. Mehrwegeventil (1) nach einem der vorstehenden Ansprüche, wobei eine Axialerstreckung entlang der Rotationsachse (R) des Drehschiebers (3) der Fluidanschlüsse (7, 9, 11) und/oder der Fluidkanäle (13, 15) wenigstens 50 % einer Gesamtaxialerstreckung des Drehschiebers (3) ausmachen, insbesondere wenigstens 60 %, wenigstens 70 %, wenigstens 80 % oder wenigstens 90 %.

6. Mehrwegeventil (1) nach einem der vorstehenden Ansprüche, wobei das Ventilgehäuse (5) einen rotationsförmigen Ventilsitz (59) umfasst, bezüglich dem der rotationsförmige Drehschieber (3) drehbeweglich gelagert ist, wobei insbesondere das Ventilgehäuse (5) den Ventilsitz (59) bildet oder ein radial zwischen Drehschieber (3) und Ventilgehäuse (5) angeordneter Ring-Ventilsitz (59) liegt.

7. Mehrwegeventil (1) nach einem der vorstehenden Ansprüche, wobei wenigstens ein Fluidkanal als Durchgangskanal gebildet ist und zwei am Außenumfang des Drehschiebers (3) gebildete Fluidanschlussöffnungen miteinander verbindet und vorzugsweise einen konstanten Durchströmungsquerschnitt besitzt.

8. Mehrwegeventil (1) nach einem der vorstehenden Ansprüche, wobei wenigstens ein weiterer Fluidkanal einen sich entsprechend einer rotationsförmigen Außenkontur des Drehschiebers (3) verändernden Durchströmungsquerschnitt besitzt, wobei insbesondere der wenigstens eine weitere Fluidkanal kontinuierlich nach außen hin offen ist.

9. Mehrwegeventil (1) nach einem der vorstehenden Ansprüche, wobei der Drehschieber (3) beim Umschalten zwischen dem ersten Steuerzustand und dem wenigstens einen weiteren Steuerzustand eine Rotationsbewegung von weniger als 90°, insbesondere weniger als 60°, vorzugsweise um 45°, bezüglich der Rotationsachse (R) durchführt.

10. Mehrwegeventil (1) nach einem der vorstehenden Ansprüche, wobei ein Fluidkanal des Drehschiebers (3) derart gestaltet ist, dass die Fluidströmung um 90° umgelenkt wird, wobei insbesondere der nach außen hin kontinuierlich offene wenigstens eine weitere Fluidkanal jeweils fluidanschlussseitig, insbesondere fluidanschlussöffnungsseitig, eine vorzugsweise konkav gekrümmte Innenkontur besitzt.

11. Mehrwegeventil (1) nach einem der vorstehenden Ansprüche, wobei ein Paar von Fluidanschlüssen (7, 9, 11) fluchtend zueinander orientiert ist und/oder ein Fluidkanal derart gestaltet ist, dass beim Leiten der Fluidströmung von einem Fluidanschluss zu einem weiteren Fluidanschluss die Fluidströmung keine Umlenkung erfährt, wobei insbesondere der Drehschieber (3) eine Rotationsstellung aufweist, in der ein Paar von Fluidanschlüssen (7, 9, 11) und der diesem Paar zugeordnete Fluidkanal zueinander fluchtend orientiert sind.

12. Mehrwegeventil (1) nach einem der vorstehenden Ansprüche, wobei ein Durchströmungsquerschnitt der Fluidanschlüsse einem Durchströmungsquerschnitt von wenigstens einem der Fluidkanäle (13, 15) und/oder einem Durchströmungsquerschnitt von einem Paar Fluidanschlussöffnungen eines Fluidkanals (13, 15) entspricht.

13. Mehrwegeventil (1) nach einem der vorstehenden Ansprüche, wobei die Fluidkanäle (13, 15) derart gestaltet sind und/oder die Fluidkanäle (13, 15) jeweils mit dem einem Fluidkanal zugeordneten Paar von Fluidanschlüssen aufeinander abgestimmt sind, dass die Fluidströmung strömungshindernisfrei, insbesondere kantenfrei, vorsprungsfrei und/oder totvolumenfrei, das Paar von Fluidanschlüssen und den diesem Paar zugeordneten Fluidkanal passieren kann.

14. Fluidkreislauf (100), insbesondere Kühlfluidkreislauf, eines Kraftfahrzeugs, umfassend ein nach einem der vorstehenden Ansprüche ausgebildetes Mehrwegeventil (1) und eine fluidführend an das Mehrwegeventil (1) angeschlossene Fluidleitungsstruktur.

15. Kühlfluidkreislauf (100) zum Zu- bzw. Abführen eines Kühlfluids in bzw. von einem Motor (105), insbesondere einem Verbrennungsmotor oder einem Elektromotor, eines Kraftfahrzeugs, umfassend:
- einen einen Motorfluideingang (103) und einen Motorfluidausgang (107) verbindenden Hauptkanal (109), in dem ein Kühler (111) integriert ist und über den dem Motor (105) gekühltes Kühlfluid zuführbar ist;
- einen Bypasskanal (113) zum Umgehen des Kühlers (111); und
- ein insbesondere nach einem der Ansprüche 1 bis 13 ausgebildetes Mehrwegeventil (1) mit einem als Kühlstellung ausgebildeten ersten Steuerzustand, in dem dem Motor (105) gekühltes Kühlfluid von dem Kühler über den Hauptkanal (109) zugeführt wird und in dem Kühlfluidströmung durch den Bypasskanal (113) verhindert ist, und einem als Bypassstellung ausgebildeten weiteren Steuerzustand, in dem dem Motor (105) ungekühltes Kühlfluid über den Bypasskanal (113) zugeführt wird und in dem Kühlfluidströmung durch den Hauptkanal (109) verhindert ist.
